# EUROPÄISCHE PATENTANMELDUNG

(11) **EP 3 799 087 A1**
(43) Veröffentlichungstag der Anmeldung: **31.03.2021**
(21) Anmeldenummer: 20196738.7
(22) Anmeldetag: 17.09.2020
(51) Int. Cl.: H01G 4/18, H01G 4/20, H01G 4/32

(54) **LEISTUNGSKONDENSATOR, VERFAHREN ZUR FERTIGUNG EINES LEISTUNGSKONDENSATORS UND KONVERTER**

(30) Priorität: 26.09.2019 DE 102019214769
(71) Anmelder: Siemens Energy Global GmbH & Co. KG, 81739 München (DE)
(72) Erfinder: Cassignol, Caroline, 81735 München (DE); Karmazin, Roman, 81829 München (DE); Streibl, Maximilian Klaus, 95448 Bayreuth (DE)

(57) **Zusammenfassung**

Der Leistungskondensator weist ein Dielektrikum auf, welches mindestens einen Kunststoff und mindestens einen weiteren den Verlustfaktor des Dielektrikums verglichen mit dem Verlustfaktor des reinen Kunststoffs reduzierenden Bestandteil umfasst.

Bei dem Verfahren zur Fertigung eines solchen Leistungskondensators wird das Dielektrikum derart hergestellt, dass der weitere Bestandteil mit einer Formmasse des Kunststoffs, insbesondere einem fließfähigen Kunststoff oder einem Granulat oder Pulver des Kunststoffs, gemischt wird.

Der Konverter umfasst mindestens einen solchen Leistungskondensator und/oder ist hergestellt nach einem solchen Verfahren.

## Beschreibung

Die Erfindung betrifft einen Leistungskondensator, ein Verfahren zur Fertigung eines Leistungskondensators und einen Konverter.

Leistungskondensatoren wie Zwischenkreiskondensatoren werden insbesondere in HVDC-Konverterstationen (HVDC = engl. "High-Voltage Direct Current") eingesetzt. Beim Betrieb solcher Leistungskondensatoren treten dielektrische Verluste, d.h. elektrische Verluste im Dielektrikum, auf. Diese dielektrischen Verluste bedingen zum einen Übertragungsverluste, welche die Effizienz des Konverters verringern, und zum anderen verursachen dielektrische Verluste eine Wärmeleistung, welche durch entsprechende Kühleinrichtungen abgeführt werden muss. Zudem bedingt die Wärmeleistung auch zusätzliche Randbedingungen beim Design des Kondensators, insbesondere eine höhere Baugröße des Kondensators.

Polypropylen-Folienkondensatoren erzeugen nach aktuellem Stand der Technik etwa 100 W Verlustleistung pro 8,5 mF-Kondensator, wovon etwa 30 % im Dielektrikum entstehen. Diese dielektrischen Verluste sind aus den genannten Gründen sehr teuer.

Es ist bekannt, bei Leistungskondensatoren in Gestalt von auf Polypropylenfolien basierenden Folienkondensatoren eine passive Kühlung des Folienkondensators über das Kondensatorgehäuse vorzusehen. Dies erfordert eine entsprechend groß dimensionierte Platine und eine ausreichend dimensionierte Klimatisierungsanlage.

Es ist daher Aufgabe der Erfindung, einen verbesserten Leistungskondensator zu schaffen, welcher insbesondere effizienter betreibbar ist. Ferner ist es Aufgabe der Erfindung, ein Verfahren zur Fertigung eines solchen Leistungskondensators anzugeben, mittels welchem ein solcher Leistungskondensator fertigbar ist. Zudem ist es Aufgabe der Erfindung, einen effizienter betreibbaren Konverter anzugeben.

Diese Aufgabe der Erfindung wird mittels eines Leistungskondensators mit den in Anspruch 1 angegebenen Merkmalen, mittels eines Verfahrens zur Fertigung eines solchen Leistungskondensators mit den in Anspruch 7 angegebenen Merkmalen sowie mit einem Konverter mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Der erfindungsgemäße Leistungskondensator weist mindestens ein Dielektrikum auf, welches mindestens einen Kunststoff und mindestens einen weiteren Bestandteil umfasst. Der weitere Bestandteil reduziert bei dem erfindungsgemäßen Leistungskondensator den Verlustfaktor des Dielektrikums verglichen mit dem Verlustfaktor des reinen Kunststoffs. Dabei kann in einer bevorzugten Weiterbildung des erfindungsgemäßen Leistungskondensators der Verlustfaktor des reinen Kunststoffs den Verlustfaktor in dem Fall bezeichnen, in welchem eine identische Masse reinen Kunststoffs an die Stelle des weiteren Bestandteils tritt. Alternativ und ebenfalls bevorzugt kann der Verlustfaktor des reinen Kunststoffs den Verlustfaktor in dem Fall bezeichnen, in welchem der weitere Bestandteil lediglich entfällt.

Erfindungsgemäß reduziert der weitere Bestandteil den Verlustfaktor des Dielektrikums. Folglich resultiert eine geringere Verlustwärmeleistung des Dielektrikums in Leistungskondensatoren im Vergleich zu bekannten Leistungskondensatoren. Daraus folgt eine höhere Übertragungseffizienz des Leistungskondensators sowie ein geringerer Aufwand für eine Kühlung des Kondensators. Folglich ist die Übertragungseffizienz sowie eine Platzeffizienz beim Aufbau des Leistungskondensators erhöht.

In einer bevorzugten Weiterbildung des erfindungsgemäßen Leistungskondensators ist dieser ein Folienkondensator, wobei das Dielektrikum eine Folie ist. Leistungskondensatoren in Form von Folienkondensatoren sind hinlänglich bekannt und werden routinemäßig bei HVDC-Konvertern eingesetzt, sodass derart ausgebildete Leistungskondensatoren keinerlei Anpassung für einen solchen Einsatz erfordern. Vorteilhaft können insbesondere bestehende Herstellprozesse zur Herstellung der Folien des Folienkondensators ohne maßgebliche Anpassung eingesetzt werden.

Vorzugsweise ist bei dem erfindungsgemäßen Leistungskondensator der Kunststoff Polypropylen. Grundsätzlich kann in weiteren Weiterbildungen der Erfindung der Kunststoff auch ein sonstiger Kunststoff, beispielsweise ein sonstiges Polymer, sein. Kunststoffe wie insbesondere Polypropylen werden routinemäßig als Dielektrikum von Leistungskondensatoren eingesetzt, sodass insoweit auf eine reiche Erfahrung zurückgegriffen werden kann. Vorteilhaft können Kunststoffen wie insbesondere Polypropylen auf besonders einfache Weise weitere Bestandteile zugemischt werden, sodass der erfindungsgemäße Leistungskondensator besonders einfach fertigbar ist. Ferner können Dielektrika des erfindungsgemäßen Leistungskondensators auch in gewohnter Weise gehandhabt werden, sodass zur Fertigung von erfindungsgemäßen Leistungskondensatoren weitestgehend auf bekannte Fertigungsmethoden zurückgegriffen werden kann.

Geeigneterweise ist bei dem erfindungsgemäßen Leistungskondensator der mindestens eine weitere Bestandteil mindestens ein Cycloolefin-Copolymer (im Folgenden auch als "COC" abgekürzt). Vorteilhaft weist COC einen um eine Größenordnung geringeren Verlustfaktor auf. Zudem sind Gemische von Polypropylen und COC mit einem Masseanteil von bis zu 40 % COC unaufwändig herstellbar. Vorteilhaft kann bereits mit einem Masseanteil von 20 Prozent eine Verringerung des Verlustfaktors um etwa ein Viertel erreicht werden, sodass dielektrisehe Verluste und dadurch bedingte Verlustwärme deutlich verringerbar sind. Gleichzeitig ist die Durchschlagsfestigkeit des Gemischs trotz des weiteren Bestandteils vergleichbar gering wie diejenige von Polypropylen.

Bei dem erfindungsgemäßen Leistungskondensator nimmt der weitere Bestandteil einen Masseanteil von mindestens 0,03 Prozent, vorzugsweise mindestens 2 Prozent, geeignet mindestens 5 Prozent und idealerweise mindestens 10 Prozent, ein. Alternativ oder zusätzlich und ebenfalls bevorzugt nimmt der weitere Bestandteil einen Masseanteil von höchstens 30 Prozent, vorzugsweise von höchstens 25 Prozent, ein. Im Falle des weiteren Bestandteils in Form von COC bildet ist der Masseanteil vorzugsweise zumindest 5 Prozent, vorzugsweise zumindest 10 Prozent.

In einer bevorzugten Weiterbildung des erfindungsgemäßen Leistungskondensators weist der mindestens eine weitere Bestandteil mit hydrophoben Molekülen oberflächenfunktionalisierte Nanopartikel, insbesondere Siliziumdioxid-Nanopartikel, auf. Auch mittels eines vergleichsweise geringen Masseanteils von Nanopartikeln in einem Kunststoff wie insbesondere Polypropylen kann eine deutliche Verringerung des dielektrischen Verlustfaktors des Kunststoffs bei ansonsten gleichen Folieneigenschaften wie Durchschlagsfestigkeit und mechanisches Verhalten erzielt werden. Im Falle von Nanopartikeln als weiterem Bestandteil nimmt der weitere Bestandteil vorzugsweise einen Masseanteil von mindestens 0,03 Prozent, zweckmäßig mindestens 0,1 Prozent und vorzugsweise mindestens 2 Prozent, ein. Trotz des geringen Masseanteils kann in dieser Weiterbildung der Erfindung ein um bis zu 40 % verringerter dielektrischer Verlustfaktor erzielt werden. In dieser Weiterbildung der Erfindung ist daher die vom Dielektrikum fortzuführende Wärme deutlich verringerbar. Bei dem weiteren Bestandteil in Form von Nanopartikeln reicht bereits ein sehr geringer Masseanteil zur Verringerung dielektrischer Verluste aus. Aufgrund der sehr geringen erforderlichen Masseanteile ist der erfindungsgemäße Leistungskondensator besonders wirtschaftlich fertigbar. Zudem kann aufgrund der geringen erforderlichen Massenanteile eine hohe Durchschlagsfestigkeit erzielt werden.

Bei dem erfindungsgemäßen Verfahren zur Fertigung eines Leistungskondensators wie oben beschrieben wird das Dielektrikum derart hergestellt, dass der weitere Bestandteil mit einer Formmasse des Kunststoffs, insbesondere einem fließfähigen Kunststoff oder einem Granulat und/oder Pulver des Kunststoffs, gemischt wird. Auf diese Weise kann die Formmasse des Kunststoffs wie auf herkömmliche Weise für den reinen Kunststoff üblich weiterverarbeitet werden.

Bevorzugt wird bei dem erfindungsgemäßen Verfahren der weitere Bestandteil als Formmasse, insbesondere als Granulat oder Pulver, mit dem Kunststoff gemischt. Insbesondere liegen sowohl der Kunststoff als auch der weitere Bestandteil als Formmasse vor und werden miteinander gemischt.

Der erfindungsgemäße Konverter umfasst mindestens einen Leistungskondensator wie oben beschrieben und/oder hergestellt nach einem Verfahren wie oben beschrieben. Besonders vorteilhaft ist der erfindungsgemäße Konverter ein HVDC-Konverter.

Nachfolgend wird die Erfindung anhand zweier Ausführungsbeispiele näher erläutert.

Ein erster erfindungsgemäßer Leistungskondensator ist ein Folienkondensator und weist als Dielektrikum eine mit einem Kunststoff, im beschriebenen Ausführungsbeispiel Polypropylen, gebildete Folie auf. Die Folie umfasst als weiteren Bestandteil COC, welcher den dielektrischen Verlustfaktor des Dielektrikums senkt. Im hier beschriebenen Ausführungsbeispiel beträgt der Masseanteil des COC 20 Prozent, wodurch der Verlustfaktor der Folie, also des Dielektrikums, um etwa ein Viertel gegenüber dem reinen Propylen verringert ist. Hierbei wird mit einem Dielektrikum verglichen, bei welchem der Masseanteil des COC an die Stelle einer identischen Masse von Polypropylen tritt. Infolge des verringerten Verlustfaktors ist die von dem Dielektrikum abgegebene Wärme deutlich verringert. Die Durchschlagfestigkeit der Folie ist gegenüber einer Folie aus reinem Polypropylen ungeändert.

Gegenüber herkömmlichen Folien aus reinem Propylen sind die mechanischen Eigenschaften der Folie ungeändert, sodass bereits bestehende Verfahren zur erfindungsgemäßen Fertigung der Folien und folglich auch des Kondensators herangezogen werden können. Das Gemisch von COC und Polypropylen wird erfindungsgemäß gefertigt, indem das COC mit dem Polypropylen in Form von Granulat als Trockenmischung gemischt wird. Nachfolgend kann eine Extrusion eines Castfilms des Gemischs von COC und Polypropylen erfolgen. Das Extrudat wird dazu beispielsweise mittels einer Breitschlitzdüse mit Kleiderbügelverteiler auf eine Chill-Roll geführt, um den Castfilm herzustellen. Der Castfilm wird dann entweder sequenziell oder simultan in Maschinenrichtung (MD) und quer dazu (TD) zur Folie verstreckt. Danach wird ein Längs- und Querschrumpf über einen Relaxations- und Temperschritt eingestellt. Abschließend werden die Ränder der Folie beschnitten und eine Corona-Oberflächenbehandlung vor dem Aufwickeln der Folie durchgeführt. Die Folie wird dann mit Zink und Aluminium metallisiert, zugeschnitten und zu Kondensator-Einzelwickeln aufgewickelt. Die Kondensator-Einzelwickel werden stirnflächig mit einer Schoopierung, also mit aufgesprühten Metallkontakten, versehen und anschließend in Gehäusen zu einem Leistungskondensator mit gewünschter Kapazität zusammengefasst. Der erfindungsgemäße Leistungskondensator wird in einem erfindungsgemäßen Konverter eingebaut.

In einem weiteren Ausführungsbeispiel des erfindungsgemäßen Leistungskondensators ist der weitere Bestandteil nicht COC, sondern aus mit hydrophoben Molekülen oberflächenfunktionalisierten Siliziumdioxid-Nanopartikeln gebildet. Die Siliziumdioxid-Nanopartikel weisen einen Primärpartikeldurchmesser von mindestens 10 Nanometern und höchstens 100 Nanometern auf und sind dem Polypropylen in einem Masseanteil von 0,1 Prozent zugemischt. In weiteren, nicht eigens beschriebenen Ausführungsbeispielen können die Siliziumdioxid-Nanopartikel auch mit einem Masseanteil von 10 Prozent oder einem zwischen 0,1 Prozent und 10 Prozent liegendem Wert zugemischt werden.

Die Siliziumdioxid-Nanopartikel werden dem Polypropylen in einer Polypropylenschmelze durch gravimetrisches Dosieren der Siliziumdioxid-Nanopartikel zugemischt, sodass ein Gemisch des Polypropylens und der Siliziumdioxid-Nanopartikel entsteht. Die Einarbeitung der Siliziumdioxid-Nanopartikel erfolgt mittels Compoundierung.

Anschließend wird aus diesem Gemisch von Polypropylen und Siliziumdioxid-Nanopartikeln im hier beschriebenen Ausführungsbeispiel ein Granulat erstellt, welches dann bei der Folienherstellung erneut in einem Extruder aufgeschmolzen werden muss. Alternativ kann aber auch in weiteren Ausführungsbeispielen das Gemisch von Polypropylen und Siliziumdioxid-Nanopartikeln direkt nach der Compoundierung über eine Breitschlitzdüse mit Kleiderbügelverteiler auf eine Chill-Roll geführt werden und so ein Castfilm hergestellt werden. Dieser Castfilm wird dann wie im vorhergehenden Ausführungsbeispiel beschreiben entweder sequenziell oder simultan in einer Maschinenrichtung und quer dazu zur Folie verstreckt. Danach wird ein Längs- und Querschrumpf über einen Relaxations- und Temperschritt eingestellt. Abschließend werden die Ränder der Folie beschnitten und eine Corona-Oberflächenbehandlung vor dem Aufwickeln durchgeführt. Die fertige Folie wird dann mit Zink und Aluminium metallisiert, zugeschnitten und zu Kondensator-Einzelwickeln aufgewickelt.

Die Einzelwickel werden stirnflächig mit einer Schoopierung versehen und anschließend in Gehäusen zu einem Leistungskondensator mit gewünschter Kapazität zusammengefasst. Der erfindungsgemäße Leistungskondensator wird in einem erfindungsgemäßen Konverter eingebaut.

## Patentansprüche

1. Leistungskondensator mit einem Dielektrikum, welches mindestens einen Kunststoff und mindestens einen weiteren den Verlustfaktor des Dielektrikums verglichen mit dem Verlustfaktor des reinen Kunststoffs reduzierenden Bestandteil umfasst.

2. Leistungskondensator nach dem vorhergehenden Anspruch, welcher ein Folienkondensator ist, wobei das Dielektrikum mindestens eine Folie ist.

3. Leistungskondensator nach einem der vorhergehenden Ansprüche, bei welchem der Kunststoff Polypropylen ist.

4. Leistungskondensator nach einem der vorhergehenden Ansprüche, bei welchem der mindestens eine weitere Bestandteil mindestens ein Cycloolefin-Copolymer ist.

5. Leistungskondensator nach einem der vorhergehenden Ansprüche, bei welchem der weitere Bestandteil einen Masseanteil von mindestens 0,1 Prozent, vorzugsweise mindestens 2 Prozent, geeignet mindestens 5 Prozent und idealerweise mindestens 10 Prozent und/oder einen Masseanteil von höchstens 30 Prozent, vorzugsweise höchstens 25 Prozent, einnimmt.

6. Leistungskondensator nach einem der vorhergehenden Ansprüche, bei welchem der mindestens eine weitere Bestandteil mit hydrophoben Molekülen oberflächenfunktionalisierte Nanopartikel, insbesondere Siliziumdioxid-Nanopartikel, aufweist.

7. Verfahren zur Fertigung eines Leistungskondensators nach einem der vorhergehenden Ansprüche, bei welchem das Dielektrikum derart hergestellt wird, dass der weitere Bestandteil mit einer Formmasse des Kunststoffs, insbesondere einem fließfähigen Kunststoff oder einem Granulat oder Pulver des Kunststoffs, gemischt wird.

8. Verfahren nach einem der vorhergehenden Ansprüche, bei welchem der weitere Bestandteil als Formasse, insbesondere als Granulat oder Pulver, mit dem Kunststoff gemischt wird.

9. Konverter, umfassend mindestens einen Leistungskondensator nach einem der vorhergehenden Ansprüche und/oder hergestellt nach einem Verfahren nach einem der vorhergehenden Ansprüche.
